# EUROPÄISCHE PATENTSCHRIFT

(11) **EP 2 551 530 B1**
(45) Veröffentlichungstag und Bekanntmachung des Hinweises auf die Patenterteilung: **14.05.2014**
(21) Anmeldenummer: 12004817.8
(22) Anmeldetag: 27.06.2012
(51) Int. Cl.: F16B 2/14, E21B 19/07, E21B 19/10

(54) **Vorrichtung zur Handhabung von Rohren**
Device for handling tubes
Dispositif destiné à la manipulation de tuyaux

(30) Priorität: 25.07.2011 DE 102011108654; 16.03.2012 DE 102012005794
(43) Veröffentlichungstag der Anmeldung: 30.01.2013
(73) Patentinhaber: Blohm + Voss Oil Tools GmbH, 20457 Hamburg (DE)
(72) Erfinder: Baier, Jens, 21075 Hamburg (DE); Vierke, André, 20257 Hamburg (DE)
(74) Vertreter: Hansmann, Dierk

(56) Entgegenhaltungen:
- EP-A2- 1 726 774
- WO-A2-2011/060772
- US-A- 3 889 927
- US-A- 4 408 926
- US-B1- 6 378 399

## Beschreibung

Die Erfindung betrifft eine Vorrichtung zur Handhabung von Rohren, die einen Grundkörper sowie mindestens zwei relativ zum Grundkörper beweglich angeordnete Klemmelemente aufweist, die im Bereich ihrer dem Grundkörper zugewandten Ausdehnung mindestens eine Gleitfläche aufweisen, die benachbart zu mindestens einer Korrespondenzfläche derart angeordnet ist, dass eine Vertikalbewegung des Klemmelementes in eine horizontale Bewegungskomponente des Klemmelementes transformiert wird.

Derartige Vorrichtungen werden verwendet, um insbesondere im Bereich der Offshore-Bohrtechnik Rohre von Ölbohrplattformen zu halten. Die Rohre werden hierbei aus einzelnen Segmenten zusammengesetzt, die miteinander verschraubt werden. Jeweils nach dem Aufschrauben eines Verlängerungsteiles erfolgt ein Absenken des Rohrstranges.

Die Vorrichtung fixiert den Rohrstrang typischerweise während des Anschraubens eines Verlängerungsteiles und gibt den Rohrstrang dann frei, um ein Absenken zu ermöglichen.

Von besonderer Bedeutung bei derartigen Vorrichtungen ist eine sichere und zuverlässige Halterung der Rohre. Dabei ist dafür zu sorgen, dass die Klemmelemente möglichst plan am zu halternden Rohr anliegen und dass während einer Positionierung der Klemmelemente ein Verkippen der Klemmelemente vermieden werden kann.

Aus der US 3 889 927 A ist eine Vorrichtung zur Handhabung von Rohren bekannt, die einen Grundkörper (21) sowie mindestens zwei relativ zum Grundkörper bewegliche Klemmelemente (24) aufweist, die im Bereich ihrer dem Grundkörper zugewandten Ausdehnung mindestens eine Gleitfläche aufweisen, die benachbart zu mindestens einer Korrespondenzfläche derart angeordnet ist, dass eine Vertikalbewegung des Klemmelementes in eine horizontale Bewegungskomponente des Klemmelementes transformiert wird.

Vom Grundkörper (21) ist ein Positionierelement (33) vertikal geführt, das bei einer vertikalen Bewegung mindestens abschnittsweise eine horizontale Positionierung des Klemmelementes vorgibt.

Aufgabe der vorliegenden Erfindung ist es daher, eine Vorrichtung mit der einleitend genannten Art derart zu konstruieren, dass eine zuverlässige Positionierung der Klemmelemente und eine sichere Handhabung der Rohre gewährleistet wird.

Diese Aufgabe wird erfindungsgemäß dadurch gelöst, dass vom Grundkörper mindestens ein Positionierelement vertikal geführt ist, das bei einer vertikalen Bewegung mindestens abschnittsweise eine horizontale Positionierung des Klemmelementes vorgibt.

Durch die Kombination des Klemmelementes mit einem Positionierelementes ist es möglich, zum einem durch in einer Längsrichtung des Grundkörpers angeordnete Zylinder ausreichend große Stell- und Haltekräfte einbringen zu können, andererseits aber auch ein großflächiges Anliegen des Klemmelementes am Rohr und eine zuverlässige Positionierung des Klemmelementes zu gewährleisten. Insbesondere wird auch ein Verkippen des Klemmelementes durch die Verwendung des Positionierelementes verhindert.

Die erfindungsgemäße Vorrichtung unterstützt eine Anpassung an unterschiedlich große Rohrdurchmesser und führt zu einer äußerst kompakten Bauweise. Die Anpassung an unterschiedliche Rohrdurchmesser erfolgt durch ein Auswechseln der Klemmelemente.

Eine mechanisch hoch belastbare Konstruktion wird dadurch unterstützt, dass das Positionierelement ringartig ausgebildet ist.

Ein seitliches Abnehmen der Vorrichtung von einem Rohrstrang wird dadurch ermöglicht, das Positionierelement aus mindestens zwei Segmenten ausgebildet ist.

Eine Keilwirkung bei der Durchführung von Positionierbewegungen wird dadurch erreicht, dass die Korrespondenzfläche des Positionierelementes schräg zur vertikalen Richtung angeordnet ist.

Hohe Positionierkräfte können dadurch generiert werden, dass das Positionierelement hydraulisch relativ zum Grundkörper verstellbar ist. Alternativ kann auch eine pneumatische Verstellung erfolgen.

Darüber hinaus ist auch daran gedacht, dass eine Halterung des Klemmelementes hydraulisch relativ zum Grundkörper verstellbar ist. Alternativ kann auch eine pneumatische Verstellung erfolgen.

Eine verkippungsfreie horizontale Verstellung der Klemmelemente wird dadurch unterstützt, dass das Klemmelement sowohl eine obere Gleitfläche als auch eine untere Gleitfläche aufweist.

Funktionell erweist es sich als zweckmäßig, dass die obere Gleitfläche für einen Kontakt mit dem Positionierelement vorgesehen ist.

Ebenfalls ist vorgesehen, dass die untere Gleitfläche für einen Kontakt mit einem Leitelement vorgesehen ist, dass eine Leitfläche aufweist.

Eine mechanisch einfache Konstruktion wird dadurch erreicht, dass das Leitelement unbeweglich mit dem Grundkörper verbunden ist.

Zur Verbesserung der Handhabungssicherheit wird vorgeschlagen, dass der Grundkörper eine Verdrehsicherung aufweist.

Eine zuverlässige Durchführung sowohl eines Absenkens als auch eines Anhebens der beweglichen Komponenten wird dadurch erreicht, dass zur hydraulischen Verstellung verwendete Hydraulikzylinder jeweils als doppelt wirkende Zylinder ausgebildet sind.

Ein Zurückziehen des Klemmelementes in eine Grundpositionierung wird dadurch unterstützt, dass das Klemmelement relativ zur Halterung von mindestens einer Feder verspannbarer ist.

In den Zeichnungen sind Ausführungsbeispiele der Erfindung dargestellt. Es zeigen:
- Fig. 1: eine perspektivische Außenansicht der Vorrichtung,
- Fig. 2: einen Vertikalschnitt durch die Vorrichtung in einem Betriebszustand mit einer Positionierung der Klemmelemente in einem zurückgefahrenen Zustand,
- Fig. 3: die Vorrichtung gemäß Fig. 2 nach einer teilweisen Absenkung des Positionierelementes und in Richtung einer Haltepositionierung verschobenen Klemmelementen,
- Fig. 4: die Vorrichtung gemäß Fig. 2 und Fig. 3 mit maximal abgesenktem Positionierelement und maximal in Richtung aufeinander zu positionierten Klemmelementen,
- Fig. 5: einen Vertikalschnitt in einer gegenüber Fig. 3 um 90 Grad gedrehten Schnittebene und
- Fig. 6: eine perspektivische Darstellung eines Klemmelementes bei einer Blickrichtung schräg von hinten auf die Gleitflächen.

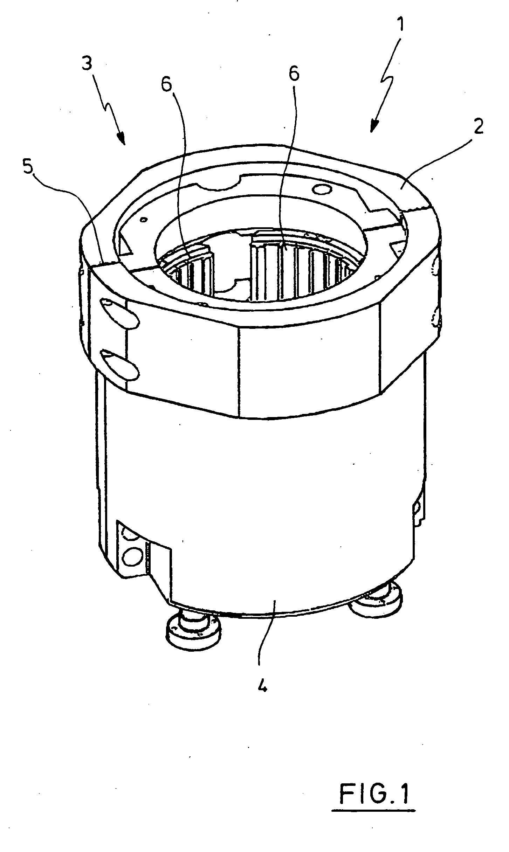

Fig. 1 zeigt eine perspektivische Außenansicht einer Vorrichtung zur Handhabung von Rohren. Die Vorrichtung besitzt einen Grundkörper (1), der zur Unterstützung einer Montage im Bereich von Bohrplattformen einen oberen Kragen (2) aufweist. Der Grundkörper (1) kann hierdurch in eine zugeordnete Ausnehmung der Bohrplattform eingeführt werden und liegt mit dem Kragen (2) im Bereich einer Oberseite der Plattform auf.

Beim dargestellten Ausführungsbeispiel besteht der Grundkörper (1) aus zwei Segmenten (3, 4), die im Bereich einer vertikalen Trennebene (5) gegeneinander grenzen. Die Segmente (3, 4) werden typischerweise miteinander verschraubt.

Der Grundkörper (1) besitzt eine rohrähnliche Grundkontur. Durch eine obere Öffnung hindurch sind Klemmelemente (6) sichtbar, die zur Fixierung des zu handhabenden Rohres vorgesehen sind.

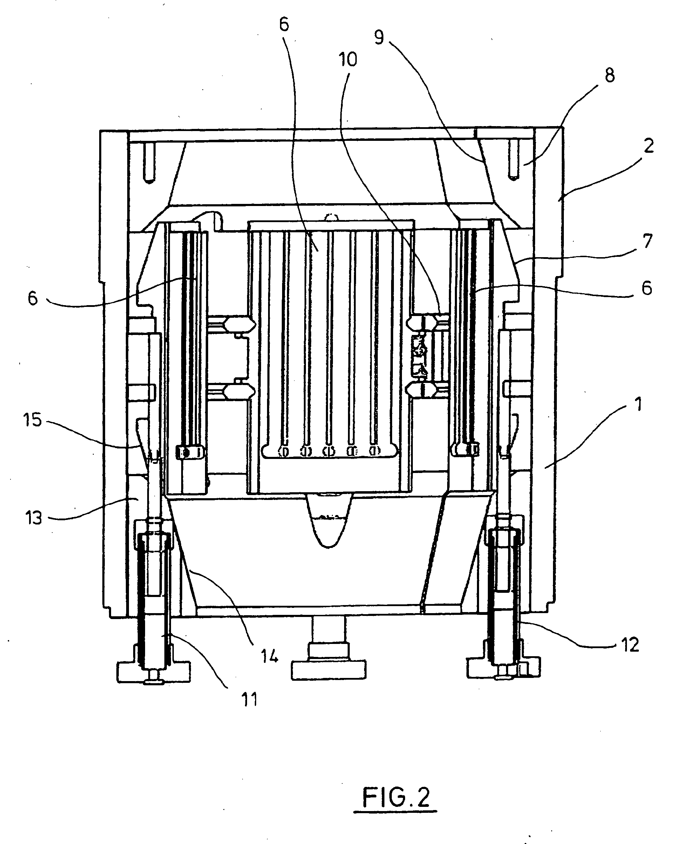

Fig. 2 zeigt einen Vertikalschnitt durch den Grundkörper (1). Beim dargestellten Ausführungsbeispiel werden vier Klemmelemente (6) verwendet, von denen in Fig. 2 drei Klemmelemente (6) zu sehen sind. Die Klemmelemente (6) weisen im Bereich ihrer dem Grundkörper (1) zugewandten und somit ihrer dem zu halternden Rohr abgewandten Rückseite mindestens eine Gleitfläche (7) auf. Die Gleitfläche (7) erstreckt sich schräg zu einer vertikalen Richtung. Ein typischer Neigungswinkel liegt in einem Bereich von 10 bis 20 Grad. Das dargestellte Ausführungsbeispiel zeigt einen Winkel von 15,5 Grad.

Im dargestellten Betriebszustand ist zumindest bereichsweise oberhalb der Klemmelemente (6) ein Positionierelement (8) angeordnet. Das Positionierelement (8) weist eine ringartige Kontur auf, wobei der Ring einteilig oder ähnlich wie der Grundkörper (1) aus Segmenten aufgebaut sein kann. Das Positionierelement (8) weist mindestens eine Korrespondenzfläche (9) auf, die schräg zur vertikalen Richtung geneigt ist. Vorzugsweise besitzt die Korrespondenzfläche (9) relativ zur vertikalen Richtung die gleiche Neigung wie die Gleitfläche (7).

Das Positionierelement (8) ist in einer vertikalen Richtung beweglich innerhalb des Grundkörpers (1) geführt. Aus Fig. 2 ist ebenfalls erkennbar, dass die Klemmelemente (6) von der Halterung (10) in einer horizontalen Richtung beweglich geführt sind. Die Halterung (10) besitzt vorzugsweise eine ringartige Gestaltung. Auch die Halterung (10) kann einteilig oder aus Segmenten realisiert sein.

Die Halterung (10) ist in einer vertikalen Richtung beweglich innerhalb des Grundkörpers (1) geführt. Zur Unterstützung einer Positionierbewegung sind Hydraulikzylinder (11, 12) mit der Halterung (10) verbunden. Alle nachfolgend beispielhaft erläuterten hydraulischen Verstellungen lassen sich sinngemäß auch pneumatisch realisieren.

In einem in lotrechter unteren Bereich des Grundkörpers (1) ist ein Leitelement (13) angeordnet, das mindestens eine Leitfläche (14) aufweist. Die Leitfläche (14) ist schräg zur vertikalen Richtung geneigt. Im Bereich der dem Grundkörper (1) zugewandten Rückseite der Klemmelemente (6) ist eine Gleitfläche (15) vorgesehen, die für einen Kontakt mit der Leitfläche (14) ausgebildet ist. Typischerweise besitzt die Gleitfläche (15) relativ zur vertikalen Richtung die gleiche Neigung wie die Leitfläche (14). Das Leitelement (13) ist typischerweise unbeweglich vom Grundkörper (1) gehaltert.

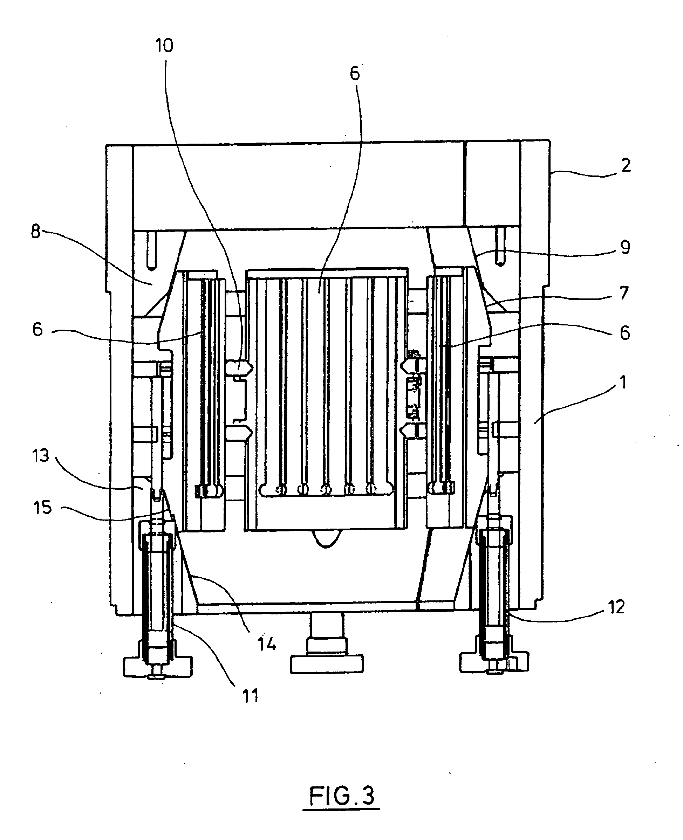

Fig. 3 zeigt die Anordnung gemäß Fig. 2 nach einer teilweisen Absenkung des Positionierelementes (8). Es ist zu erkennen, dass sich die Korrespondenzfläche (9) des Positionierelementes (8) hierbei in Kontakt mit der Gleitfläche (7) des Klemmelementes (6) befindet. Ebenfalls liegt bereits ein Kontakt zu der Gleitfläche (15) des Klemmelementes (6) und der Leitfläche (14) des Leitelementes (13) vor. Durch diese Kontakte zwischen den schräg verlaufenden Flächen sind die Klemmelemente (6) aufeinander zu verschoben.

Typischerweise erfolgt eine Koordinierung der Vertikalbewegung des Positionierelementes (8) und der Vertikalbewegung der Halterung (10) derart, dass das Positionierelement (8) den doppelten Weg wie die Halterung (10) zurücklegt. Die entsprechende Bewegungskoordinierung kann hydraulisch über eine entsprechende Ansteuerung der jeweiligen Zylinder erfolgen.

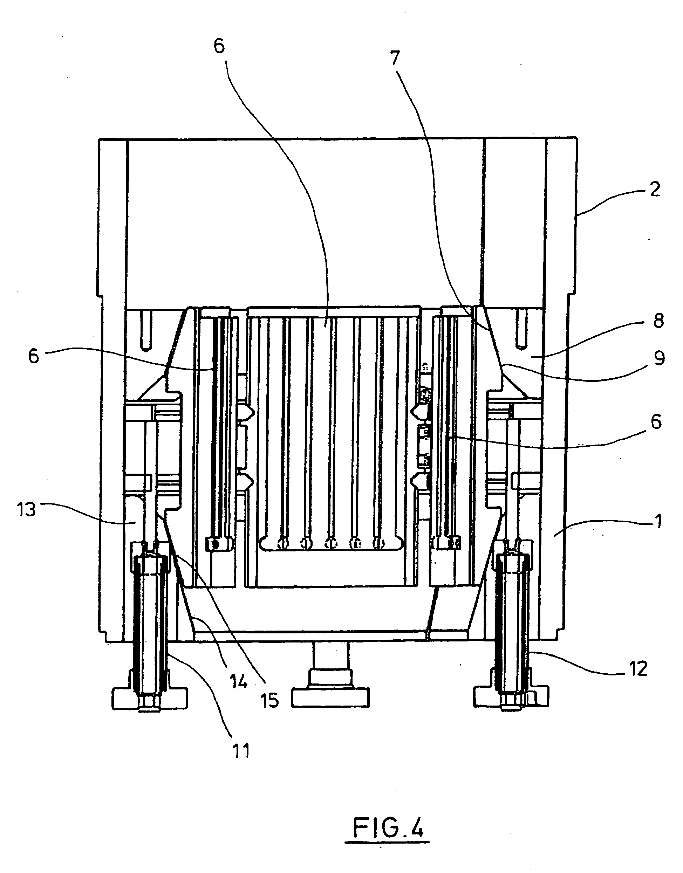

Fig. 4 zeigt die Anordnung gemäß Fig. 2 und Fig. 3 in einem maximal abgesenkten Zustand des Positionierelementes (8) sowie der Halterung (10). Die Klemmelemente (6) sind hierdurch im vorgegebenen konstruktiven Rahmen maximal aufeinander zubewegt.

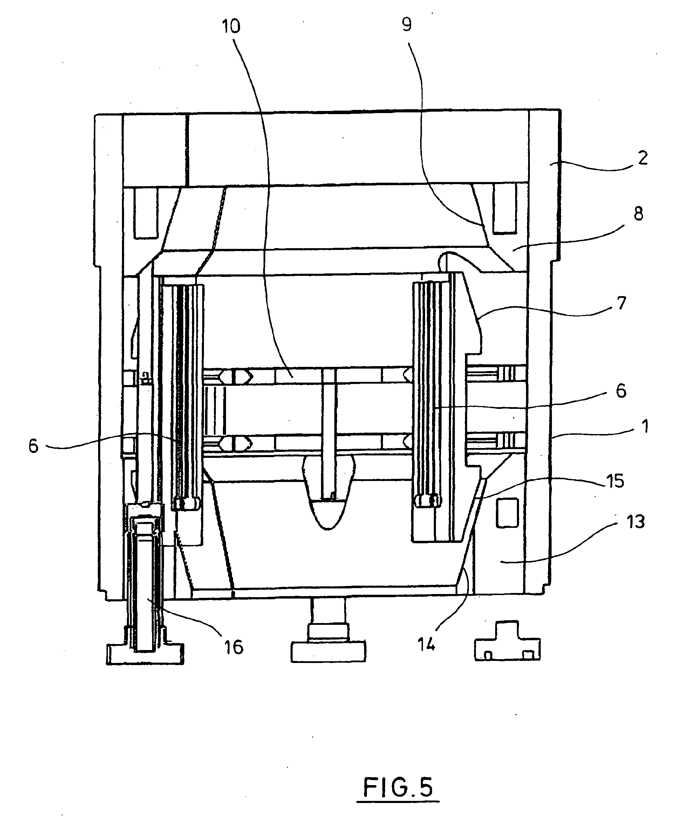

Fig. 5 zeigt eine gegenüber den Darstellungen in Fig. 2 bis Fig. 4 um 90 Grad verdrehte vertikale Schnittebenen. In dieser Schnittdarstellung ist ein Hydraulikzylinder (16) zu erkennen, der das Positionierelement (8) in der vertikalen Richtung verstellt. Typischerweise werden zwei derartige Hydraulikzylinder (16) zur Verstellung des Positionierelementes (8) verwendet.

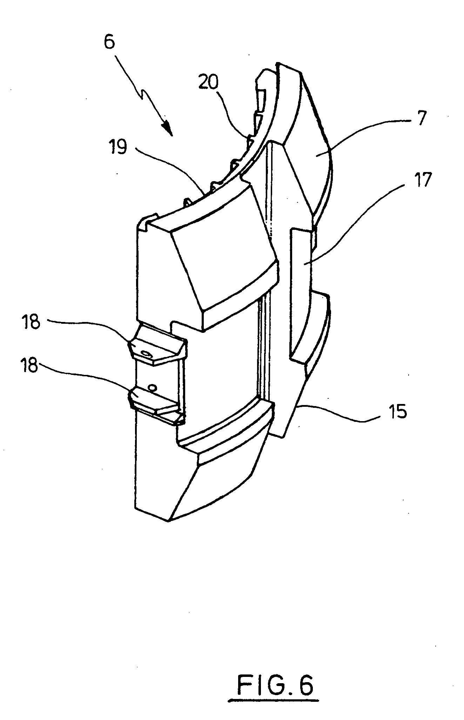

Fig. 6 zeigt eine perspektivische rückwärtige Ansicht eines Klemmelementes (6). Es ist zu erkennen, dass die Gleitflächen (7) beziehungsweise die Gleitflächen (15) jeweils auf rückwärtigen Vorsprüngen des Klemmelementes (6) angeordnet sind. Die Vorsprünge sind sowohl in einer horizontalen Richtung als auch in einer vertikalen Richtung relativ zu einander beanstandet. In einer vertikalen Richtung ergibt sich hierdurch zwischen den Vorsprüngen ein Bauraum (17), durch den sich die Hydraulikzylinder (16) zur Verstellung des Positionierelementes (8) hindurch erstrecken können.

Im Bereich einer Vorderseite des Klemmelementes (6) ist vorzugsweise eine Profilierung mit Rippen und Nuten angeordnet. Hierdurch können lokale hohe Andruckkräfte auf das zu halternde Rohr übertragen werden.

Seitlich besitzt das Klemmelement (6) Vorsprünge (18), um eine Führung durch die Halterung (10) zu unterstützen.

Die Hydraulikzylinder (11, 12 ,16) werden vorzugsweise als doppelt wirkende Zylinder ausgebildet. Hierdurch kann sowohl eine Vorschubbewegung als auch ein Rückhub der Hydraulikzylinder hydraulisch gesteuert erfolgen und die entsprechenden Anschlüsse können ausschließlich am Ende des Zylinders angeordnet sein.

Der gewählte Neigungswinkel der Gleitflächen (7, 15) unterstützt eine Selbsthemmung der Klemmelemente (6). Bei einer Erhöhung einer Zugkraft am zu halternden Rohr erfolgt aufgrund der aufeinander einwirkenden Keilflächen auch eine Erhöhung der Haltekraft. Ein gehalterter Rohrstrang kann somit weder durchrutschen noch hinabfallen.

Durch die gemäß dem Ausführungsbeispiel veranschaulichte Segmentierung des Grundkörpers (1), des Positionierelementes (8), der Halterung (10) sowie des Leitelementes (13) ist es möglich, die betreffenden Bauelemente gegebenenfalls in die einzelnen Segmente aufzuteilen und seitlich vom Rohrstrang zu entfernen.

Die Klemmelemente (6) können relativ zur Halterung (10) über Zugfedern verspannt werden. Hierdurch wird ein Zurückziehen der Klemmelemente (6) bei einer Rückkehr in die in Fig. 2 veranschaulichte Grundpositionierung unterstützt.

## Patentansprüche

1. Vorrichtung zur Handhabung von Rohren, die einen ringartigen Grundkörper sowie mindestens zwei relativ zum Grundkörper (1) bewegliche Klemmelemente (6) aufweist, die im Bereich ihrer dem Grundkörper zugewandten Ausdehnung mindestens eine Gleitfläche (7,15) aufweisen, die benachbart zu mindestens einer Korrespondenzfläche derart angeordnet ist, dass eine Vertikalbewegung des Klemmelementes in eine horizontale Bewegungskomponente des Klemmelementes transformiert wird, **dadurch gekennzeichnet, dass** vom Grundkörper (1) mindestens ein Positionierelement (8) (8) vertikal geführt ist, das bei einer vertikalen Bewegung mindestens abschnittsweise eine horizontale Positionierung der Klemmelemente (8) vorgibt, wobei die Klemmelemente (6) sowohl eine obere Gleitfläche (7) als auch eine untere Gleitfläche (15) aufweisen und die obere Gleitfläche (7) für einen Kontakt mit dem Positionierelement (8) vorgesehen ist und die untere Gleitfläche (15) für einen Kontakt mit einem Leitelement (13) vorgesehen ist, wobei das Positionierelement (8) ringartig ausgebildet ist und die Korrespondenzfläche (9) des Positionierelementes (8) schräg zur vertikalen Richtung angeordnet ist, und wobei das Leitelement (13) eine Leitfläche (14) aufweist, die schräg zur vertikalen Richtung geneigt ist.

2. Vorrichtung nach Anspruch 1, **dadurch gekennzeichnet, dass** das Positionierelement (8) aus mindestens zwei Segmenten ausgebildet ist.

3. Vorrichtung nach einem der Ansprüche 1 oder 2, **dadurch gekennzeichnet, dass** das Positionierelement (8) hydraulisch relativ zum Grundkörper (1) verstellbar ist.

4. Vorrichtung nach einem der Ansprüche 1, 2 oder 3, **dadurch gekennzeichnet, dass** eine Halterung (10) des Klemmelementes (6) hydraulisch relativ zum Grundkörper (1) verstellbar ist.

5. Vorrichtung nach einem der vorhergehenden Ansprüche, **dadurch gekennzeichnet, dass**, dass das Leitelement (13) unbeweglich mit dem Grundkörper (1) verbunden ist.

6. Vorrichtung nach einem der vorhergehenden Ansprüche, **dadurch gekennzeichnet, dass** der Grundkörper (1) eine Verdrehsicherung aufweist.

7. Vorrichtung nach einem der vorhergehenden Ansprüche, **dadurch gekennzeichnet, dass** zur hydraulischen Verstellung verwendete Hydraulikzylinder (11, 12, 16) jeweils als doppelt wirkende Zylinder ausgebildet sind.

8. Vorrichtung nach einem der Ansprüche 1 vorhergehenden Ansprüche, **dadurch gekennzeichnet, dass** das Klemmelement (6) relativ zur Halterung (10) von mindestens einer Feder verspannbarer ist.

## Claims

1. Device for handling pipes which has a ring-like base member and also at least two clamping elements (6) which are movable relative to said base member (1) and which have, in the region of their extension that faces towards said base member, at least one sliding face (7, 15) which is arranged, adjacently to at least one correspondent face, in such a way that a vertical movement of the clamping element is transformed into a horizontal component of motion of said clamping element, **characterised in that** there is vertically guided by the base member (1) at least one positioning element (8) which, on moving vertically at least in certain sections, predetermines a horizontal positioning of the clamping elements (6), wherein said clamping elements (6) have both an upper sliding face (7) and a lower sliding face (15) and the upper sliding face (7) is intended for contact with the positioning element (8) and the lower sliding face (15) is intended for contact with a guiding element (13), wherein the positioning element (8) is of ring-like construction and the correspondent face (9) of said positioning element (8) is arranged obliquely to the vertical direction, and wherein the guiding element (13) has a guiding face (14) which is inclined obliquely to said vertical direction.

2. Device according to Claim 1, **characterised in that** the positioning element (8) is constructed from at least two segments.

3. Device according to either of Claims 1 or 2, **characterised in that** the positioning element (8) is hydraulically adjustable, relative to the base member (1).

4. Device according to one of Claims 1, 2 or 3, **characterised in that** a holding device (10) belonging to the clamping element (6) is hydraulically adjustable, relative to the base member (1).

5. Device according to one of the preceding claims, **characterised in that** the guiding element (13) is immovably connected to the base member (1).

6. Device according to one of the preceding claims, **characterised in that** the base member (1) has protection against twisting.

7. Device according to one of the preceding claims, **characterised in that** hydraulic cylinders (11, 12, 16) used for hydraulic adjustment are each constructed as double-acting cylinders.

8. Device according to one of the preceding claims, **characterised in that** the clamping element (6) can be braced, relative to the holding device (10), by at least one spring.

## Revendications

1. Dispositif destiné à la manipulation de tubes, lequel est composé d'un corps de base (1) ainsi que d'au moins deux éléments de serrage (6), mobiles par rapport au corps de base (1), qui, dans leur sens orienté vers le corps de base, sont dotés d'au moins une surface de glissement (7, 15) qui, adjacente à au moins une surface correspondante, est disposée de telle manière qu'un mouvement vertical de l'élément de serrage se trouve transformé en une composante de mouvement horizontal de l'élément de serrage,
**caractérisé en ce que**, partant du corps de base (1), s'étend, verticalement, au moins un élément de positionnement (8) qui, lors d'un mouvement vertical, détermine, au moins par sections, un positionnement horizontal des éléments de serrage (6), sachant que les éléments de serrage (6) sont dotés aussi bien d'une surface de glissement supérieure (7) que d'une surface de glissement inférieure (15) et que la surface de glissement supérieure (7) est prévue pour un contact avec l'élément de positionnement (8) et que la surface de glissement inférieure (15) est prévue pour un contact avec un élément de guidage (13), sachant que l'élément de positionnement (8) est de forme annulaire et que la surface correspondante (9) dudit l'élément de positionnement (8) est disposée en biais par rapport à la direction verticale, et l'élément de guidage (13) étant doté d'une surface de guidage (14) qui est inclinée obliquement par rapport à la direction verticale.

2. Dispositif selon la revendication 1,
**caractérisé en ce que** l'élément de positionnement (8) est composé d'au moins deux segments.

3. Dispositif selon l'une des revendications 1 ou 2,
**caractérisé en ce que** l'élément de positionnement (8) peut être déplacé hydrauliquement par rapport au corps de base (1).

4. Dispositif selon l'une des revendications 1, 2 ou 3,
**caractérisé en ce qu'**un support (10) des éléments de serrage (6) peut être déplacée hydrauliquement par rapport au corps de base (1).

5. Dispositif selon l'une des revendications précédentes,
**caractérisé en ce que** l'élément de guidage (13) est relié de manière immobile au corps de base (1).

6. Dispositif selon l'une des revendications précédentes.
**caractérisé en ce que** le corps de base (1) est doté d'une protection contre la torsion.

7. Dispositif selon l'une des revendications précédentes,
**caractérisé en ce que** les vérins hydrauliques (11, 12, 16), utilisés pour le déplacement hydraulique, sont réalisés chacun sous le forme de vérins à double effet.

8. Dispositif selon l'une des revendications précédentes,
**caractérisé en ce que** l'élément de serrage (6) peut être contraint par rapport au support (10) par au moins un ressort.
